# EUROPEAN PATENT APPLICATION

(11) **EP 2 827 296 A1**
(43) Date of publication of application: **21.01.2015**
(21) Application number: 13761812.0
(22) Date of filing: 11.03.2013
(51) Int. Cl.: G06Q 50/10

(54) **ONLINE GAME PROVIDING METHOD FOR PROVIDING CHARACTER MAKEUP AND SYSTEM THEREFOR**

(30) Priority: 13.03.2012 KR 20120025477
(71) Applicant: Neowiz Bless Studio Corporation, Seongnam-si, Gyeonggi-do 463-870 (KR); Neowiz Games Co., Ltd., Gyeonggi-do 463-870 (KR)
(72) Inventor: LEE, Jung Hyun, Yongin-si Gyeonggi-do 448-162 (KR)
(74) Representative: Kuhnen & Wacker
(86) International application number: PCT/KR2013/001952
(87) International publication number: WO 2013/137609

(57) **Abstract**

An online game providing method being performed by an online game providing system, the online game providing system being coupled at least one game client through a network and providing an online game based on a virtual character to the coupled at least one client. The present invention propose to an online game providing method providing a virtual character makeup that provides a makeup environment like an actual makeup to the virtual character in the online game to variously decorate the virtual character and differentiate his or her own virtual character with other virtual characters through unique decoration.

## Description

### [Technical Field]

The present invention relates to a game providing technique and more particularly, to an online game providing method and system that provides an actual makeup function to a virtual character being operated by a user in an online game to apply an individuality to the virtual character and to decorate the virtual character.

### [Background Art]

An online game online has developed according as a computing device and a network environment has developed. The online game has developed due to a difference of a conventional offline game and the difference includes cooperation between online game users.

An initial online game mainly includes MORPG(Multiplayer Online Role Playing Game) like game and various online games appear according to a broad network bandwidth and a computing device development.

Such online games typically use a virtual character representing a user as a game progressing object. Therefore, the virtual character is directly used in online game contents and performs a role on a game user.

In the above, desires for expressing an individuality for the virtual character were demanded. That is, a desire of differentiating himself or herself with other game users to express a his or her own virtual character was demanded.

Therefore, various skills for decorating the virtual character are recently provided. For example, the skills include generating the virtual character with various appearances and providing various clothes to the virtual character.

However, such conventional techniques are limited to various expressions. That is, clothes worn by the virtual character or appearances of the virtual character are similarly expressed according to a trend and these similarities are limiting fundamental needs for uniquely decorating the virtual character. Appearances of the virtual character are hardly changed if determined.

According to development of a game engine, accurate and actual descriptions of the virtual character may be possible and the game users' needs for uniquely decorating his or her own virtual character may be gradually increased with a game environment development.

### [Disclosure]

Embodiments of the present invention propose to an online game providing method providing a virtual character makeup that provides a makeup environment like an actual makeup to the virtual character in the online game to variously decorate the virtual character and differentiate his or her own virtual character with other virtual characters through unique decoration.

Embodiments of the present invention propose to an online game providing method providing a makeup procedure and makeup tool effect like an actual makeup environment to cause a game user to enjoy the makeup procedure like a game.

Embodiments of the present invention propose to an online game providing method for interpreting an user's click input based on a makeup tool type to fixedly or variously set a makeup effect applying area and for providing various makeup effects and various input schemes for the makeup effects.

In some embodiments, an online game providing method may be performed by an online game providing system, the online game providing system may be coupled at least one game client through a network and provide an online game based on a virtual character to the coupled at least one client. The online game providing method may include (a) providing a makeup input interface to the at least one game client, the makeup input interface displaying a virtual character face and a list for at least one makeup tool, (b) receiving makeup tool information selected from the makeup tool list and pointer input information inputted at the displayed virtual character face from a game client, (c) determining a makeup effect applying scheme based on the makeup tool information and a makeup effect applying area based on the pointer input information according to the makeup effect applying scheme and obtaining an effect parameter being applied to the makeup effect applying area and (d) applying the effect parameter to the makeup effect applying area to perform a texture adjustment on the virtual character face and providing the texture adjusted face through the makeup input interface.

In some embodiments, an online game providing system may be coupled at least one game client through a network and provide an online game based on a virtual character to the coupled at least one client. The online game providing system may include a makeup function control unit, an makeup effect applying area determination unit and an parameter obtaining unit. The makeup function control unit may provide a makeup input interface displaying a makeup tool list and a character appearance and may reprovide an adjusted character appearance applying an effect parameter about a designated makeup effect applying area. The makeup effect applying area determination unit may use at least one of pointer input information for the character appearance and makeup tool information including the makeup tool in the makeup tool list to determine a makeup effect applying area. The parameter obtaining unit may use at least one of the makeup tool information and the pointer input information to obtain a makeup effect applying parameter being applied to the makeup effect applying area.

In some embodiments, a storage medium may record a program for performing an online game providing method. The program may be coupled at least one game client through a network and provide an online game based on a virtual character to the coupled at least one client. And the program may include (a) a function of providing a makeup input interface displaying a character face and a list for at least one makeup tool to a game client, (b) a function of receiving makeup tool information in a makeup tool list and pointer input information inputted at the displayed character face from the game client, (c) a function of determining a makeup effect applying scheme based on the makeup tool information and determining a makeup effect applying area based on the pointer input information according to the selected makeup effect applying scheme to obtain a makeup effect applying parameter and (d) a function of applying the effect parameter to the applying area to adjust a texture of the character face and providing the adjusted texture of character face through the makeup input interface.

Embodiments of the present invention propose to an online game providing method providing a virtual character makeup that provides a makeup environment like an actual makeup to the virtual character in the online game to variously decorate the virtual character and differentiate his or her own virtual character with other virtual characters through unique decoration.

Embodiments of the present invention propose to an online game providing method providing a makeup procedure and makeup tool effect like an actual makeup environment to cause a game user to enjoy the makeup procedure like a game.

Embodiments of the present invention propose to an online game providing method for interpreting an user's click input based on a makeup tool type to fixedly or variously set a makeup effect applying area and for providing various makeup effects and various input schemes for the makeup effects.

### [Description of Drawings]

FIG. 1 is a diagram illustrating an online game providing system and a game client according to an example embodiment of the present invention.
FIG. 2 is a block diagram illustrating one embodiment of an online game providing system.
FIG. 3 is a diagram illustrating one embodiment of a procedure for providing a makeup function.
FIG. 4 is a diagram illustrating makeup tool information being stored in a makeup tool database.
FIG. 5 through FIG. 11 are diagrams illustrating various makeup tools and various makeup effects.
FIG. 12 is a flowchart illustrating an embodiment of the online game providing procedure.
FIG. 13 is a flowchart illustrating another embodiment of the online game providing procedure.

### [Mode for Invention]

Explanation of the present invention is merely an embodiment for structural or functional explanation, so the scope of the present invention should not be construed to be limited to the embodiments explained in the embodiment. That is, since the embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

Terms described in the present disclosure may be understood as follows.

While terms such as "first" and "second," etc., may be used to describe various components, such components must not be understood as being limited to the above terms. The above terms are used only to distinguish one component from another. For example, a first component may be referred to as a second component without departing from the scope of rights of the present invention, and likewise a second component may be referred to as a first component.

It will be understood that when an element is referred to as being "connected to" another element, it can be directly connected to the other element or intervening elements may also be present. In contrast, when an element is referred to as being "directly connected to" another element, no intervening elements are present. In addition, unless explicitly described to the contrary, the word "comprise" and variations such as "comprises" or "comprising," will be understood to imply the inclusion of stated elements but not the exclusion of any other elements. Meanwhile, other expressions describing relationships between components such as "∼ between", "immediately ∼ between" or "adjacent to ∼" sand "directly adjacent to ∼" may be construed similarly.

Singular forms "a", "an" and "the" in the present disclosure are intended to include the plural forms as well, unless the context clearly indicates otherwise. It will be further understood that terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

The present invention may be implemented as machine-readable codes on a machine-readable medium. The machine-readable medium includes any type of recording device for storing machine-readable data. Examples of the machine-readable recording medium include a read-only memory (ROM), a random access memory (RAM), a compact disk-read only memory (CD-ROM), a magnetic tape, a floppy disk, and optical data storage. The medium may also be carrier waves (e.g., Internet transmission). The computer-readable recording medium may be distributed among networked machine systems which store and execute machine-readable codes in a de-centralized manner.

The terms used in the present application are merely used to describe particular embodiments, and are not intended to limit the present invention. Unless otherwise defined, all terms used herein, including technical or scientific terms, have the same meanings as those generally understood by those with ordinary knowledge in the field of art to which the present invention belongs. Such terms as those defined in a generally used dictionary are to be interpreted to have the meanings equal to the contextual meanings in the relevant field of art, and are not to be interpreted to have ideal or excessively formal meanings unless clearly defined in the present application.

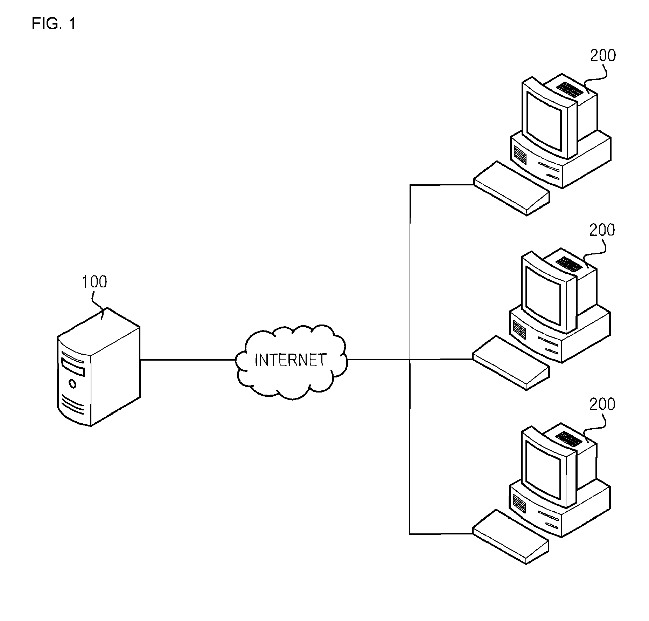

FIG. 1 is a diagram illustrating an online game providing system and a game client according to an example embodiment of the present invention.

An online game providing system 100 (hereinafter, referred to as game providing system) may simultaneously provide an online game to at least one users (game client) through an online network environment.

In described technology, the online game being provided by the game providing system 100 may correspond to an online game based on multi-users.

In described technology, the online game being provided by the game providing system 100 may not be limited to a specific type game. That is, the online game may use a character for a character makeup but may not limit a specific type game. For example, the online game may be applied to various kinds of online games such as MORPG(Multiplayer Online Role Playing Game), MMORPG(Massive Multiplayer Online Role Playing Game), sports online games, FPS(First-Person Shooting) and TPF(Third-Person Shooting).

The game providing system 100 may provide not only game contents between users (i.e., Player versus Player, PVP) but also game contents between a user and a computer implemented character (i.e., Player versus environment, PVE). Also, the game providing system 100 may provide game contents such as multi-user PVP, multi-user and multi-character PVE and combined PVP and PVE.

The game providing system 100 may perform real time data exchange with a game client 200 for providing the online game.

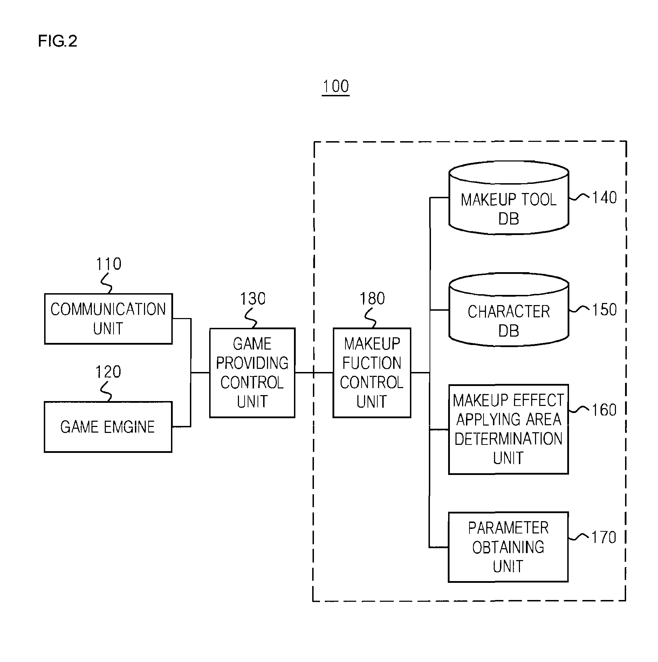

The game providing system 100 may provide makeup providing means being provided in a game to a virtual character. The game providing system 100 will be illustrated in FIG. 2.

The game client 200 corresponds to game providing means being operated in a user terminal. The user terminal may correspond to a terminal equipping a central processing unit, a storage unit and a input-output unit like a PC, a tablet PC and a smart phone.

The game client 200 may perform a communication with the game providing system 100 to provide the online game to the user. According to one embodiment, the game client 200 may load at least part of game engines for a game operation. For example, at least part of specific calculations for providing the online game may be performed on the game client 200 for a quick processing.

FIG. 2 is a block diagram illustrating one embodiment of an online game providing system.

Referring to FIG. 2, the game providing system 100 may include a communication unit 110, a game engine 120, a game providing control unit 130, a makeup tool database 140, a character database 150, a makeup effect applying area determination unit 170, a parameter obtaining unit 180 and a makeup function control unit 160.

The communication unit 110 may set or maintain a communication environment for the game client 200 and a game provision according to control of the game providing control unit 130.

The communication unit 110 may directly receive a control of the makeup function control unit 160 to perform a communication with the game client 200 according to the control of the game providing control unit 130.

The game engine corresponds to a component for a game operation and may be connected with the game client 200 to provide the online game to a user. In the disclosed embodiments, the game engine 120 may be separately implemented with the game providing control unit 130 or may be integrated into the game providing control unit 130.

In one embodiment, at least part of the game engine 120 may be loaded into the game client 200.

The game providing control unit 130 may control different components of the game providing system 100 to provide the online game.

The game providing control unit 130 may receive a request or data related with a character makeup function among online game contents to provide the corresponding request or data to the makeup function control unit 160. That is, the makeup function control unit 160 controls and performs a specific procedure related with the character makeup function. For example, when the game providing control unit 130 generates a new character or receives a request for a change of a character appearance according to a predetermined procedure, the game providing control unit 130 may provide a makeup function as a partial function of a character generating function or a partial function of a character appearance change function or the game providing control unit 130 may hand over such function to the makeup function control unit 160 to cause the makeup function control unit 160 to perform a character makeup function.

In one embodiment, for convenience's sake, FIG. 2 represents the game providing control unit 130 as a separate component that is differentiated with the makeup function control unit 160. However, the game providing control unit 130 and the makeup function control unit 160 are integrated such that this embodiment should not be used for limiting the claim scope.

The described technology may provide a makeup function of the virtual character to the user (game client) through the makeup tool database 140, the character database 150, the makeup effect applying area determination unit 170, the parameter obtaining unit 180 and the makeup function control unit 160.

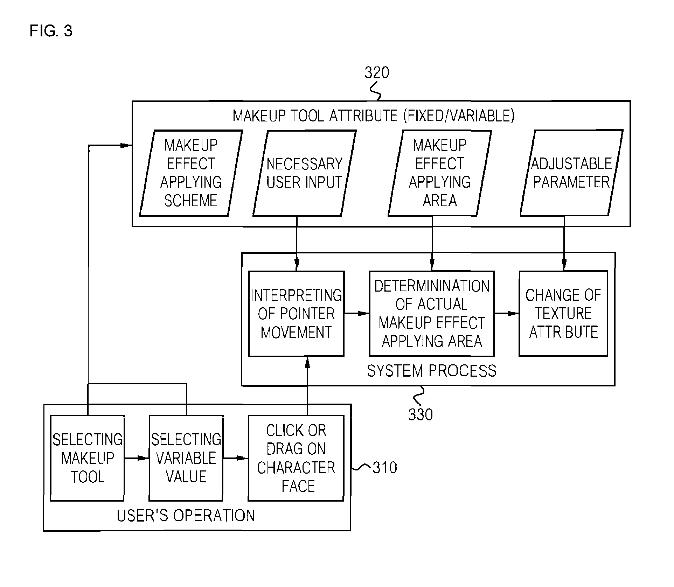

Before components necessary for the character makeup function are described, the procedure for providing a makeup function will be described with reference to FIG. 3. FIG. 3 is a diagram illustrating one embodiment of a procedure for providing a makeup function. The described technology provides a plurality of makeup tools and an attribute 320 set according to the plurality of the makeup tools may be different with each other. That is, an applying scheme for a makeup input is different according to a makeup tool and the makeup function control unit 160 may use a user input 310 and a makeup tool attribute 320 to interpret a pointer movement. Also, from the interpreted pointer movement, the makeup function control unit 160 may consider an applying area according to the makeup tool to determine an actual makeup effect applying area (hereinafter, referred to as an applying area) and may obtain an adjustable parameter (hereinafter, referred to as an effect parameter) in the applying area according to a makeup effect and may change an texture attribute based on the effect parameter to perform a makeup.

The makeup tool database 140 may store makeup tool information being applied to make up the virtual character.

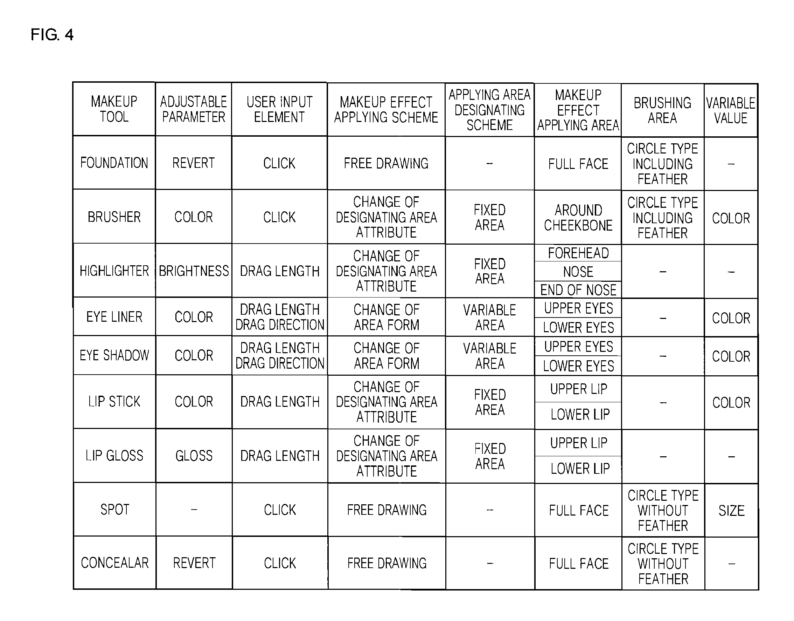

In one embodiment, the makeup tool database 140 may store at least one of an adjustable parameter per the makeup tool, a user input element, an applying scheme, an applying area designating scheme, an applying area, a brushing area and a variable value. FIG. 4 is a diagram illustrating makeup tool information being stored in a makeup tool database. In FIG. 4, the makeup tool database 140 may store or maintain a predetermined table respectively including attribute information per the makeup tool. Herein, the attribute information per the makeup tool may include a fixed attribute and a variable attribute.

The variable attribute may include an attribute being selected or adjusted by a user. In one embodiment, when the user selects a makeup tool in a sub menu subordinate to a makeup input interface, the variable attribute may be selected by a user's choice. For example, when a user selects a foundation as the makeup tool in the makeup input interface, a size of brushing area in the foundation corresponds to the variable attribute and the size of the brushing area may be controlled by the user's selection.

The fixed attribute may include a predetermined attribute per the makeup tool and the fixed attribute is not changed by a user. The described technology may use the fixed attribute per the makeup tool to interpret a user input.

The adjustable parameter may include a texture attribute being changed by the makeup tool. A revert scheme in the adjustable parameter includes removing the makeup effect. When the adjustable parameter corresponds to a color, a color scheme may include mixing with a previously selected color or overlaying the previously selected color.

The user input element indicates which an element in a user input may change the adjustable parameter. For example, when the makeup tool corresponds to a lip gloss, a gloss effect may be determined according to a drag length.

An applying scheme corresponds to an attribute indicating how a user input per the makeup tool relates to an attribute change.

An applying area designating scheme corresponds to a scheme determining the makeup effect applying area.

The applying area corresponds to at least part of a virtual character appearance in which the makeup tool effect is applied.

The brushing area corresponds to an area where the makeup effect is applied with a brush type and a variable value corresponds to an attribute designating the variable attribute.

The character database 150 may store information for the virtual character.

In one embodiment, the character database 150 may store texture information for the virtual character. In more detail, the character database 150 may store texture information necessary for displaying the virtual character and may provide the texture information of a specific character according to a request of other component to display the specific character.

The makeup function control unit 160 may control the makeup tool database 140, the character database 150, the makeup effect applying area determination unit 170 and the parameter obtaining unit 180 to provide the makeup function for the virtual character.

The makeup function control unit 160 may provide the makeup input interface for a makeup input to the game client 200. For example, the game client 200 may display at least part of the appearance of the virtual character (e.g., a character face) through the makeup input interface. For another example, the game client 200 may further include at least part of the appearance of the virtual character and a makeup tool list to display through the makeup input interface.

The makeup function control unit 160 may receive at least one of makeup tool information and pointer input information from the makeup input interface in the game client 200.

The makeup tool information may include identifying information related with a makeup tool being selected from a list for at least one of the makeup tool being provided on the makeup input interface.

The pointer input information corresponds to user input information for a pointer. In one embodiment, the pointer input information may include at least one of click information, drag length information and drag direction information.

The makeup function control unit 160 may identify the makeup tool from the makeup tool information and may apply the makeup tool attribute to interpret a pointer movement.

In one embodiment, the makeup function control unit 160 may use the makeup tool information to determine a makeup effect applying scheme. For example, the makeup function control unit 160 may search the makeup tool database 140 based on the identifying information for the makeup tool in the makeup tool information to check the adjustable parameter in the makeup tool attribute.

In one embodiment, the makeup function control unit 160 may classify the makeup effect applying scheme based on the applying area. For example, the makeup function control unit 160 may include at least one of (1) a free drawing scheme designating a pointer moving line as the as a applying area (2) a fixed area scheme fixing the applying area and (3) a variable area scheme varying the applying area according to the pointer input information as the makeup effect applying scheme.

The makeup function control unit 160 may use the makeup effect applying area determination unit 170 and the parameter obtaining unit 180 to assign the makeup effect to the character.

In one embodiment, the makeup function control unit 160 may provide information for the classified makeup effect applying scheme to the makeup effect applying area determination unit 170 and the parameter obtaining unit 180. For example, the makeup function control unit 160 may check whether the makeup effect applying scheme corresponds to one of the free drawing scheme, the fixed area scheme and the variable area scheme based on checking the makeup tool information to provide the checking information to the makeup effect applying area determination unit 170 and the parameter obtaining unit 180.

The makeup function control unit 160 may apply the effect parameter being obtained in the parameter obtaining unit 180 to the applying area being determined by the makeup effect applying area determination unit 170 to change an adjustment of the character appearance (i.e., changing a texture value).

When the makeup effect is overlapped, the makeup function control unit 160 may overlay a previous makeup or mix with the previous makeup.

In one embodiment, when the makeup effect is overlapped, the makeup function control unit 160 may determine whether the makeup tool is equal to a previous makeup tool and the effect parameter is a same category with a previous effect parameter to determine an overlaying scheme or a mixing scheme. In more detail, when the makeup tool is equal to a previous makeup tool and the effect parameter is a same category with a previous effect parameter, the makeup function control unit 160 may overlay the makeup effect and when the makeup tool is different with a previous makeup tool or the effect parameter is a different category with a previous effect parameter, the makeup function control unit 160 may mix the makeup effect. For example, when the makeup input corresponds to an eye shadow same with a previous makeup input and a color of the eye shadow is equal to a previous effect parameter (i.e., the effect parameter is a same category with a previous effect parameter), the makeup function control unit 160 may overlay an overlapping area with a recent makeup input. For another example, when the makeup input corresponds to an same eye shadow with a previous makeup input but a color of the eye shadow is different from a previous effect parameter (i.e., the effect parameter is a different category with a previous effect parameter), the makeup function control unit 160 may mix two colors for the overlapping area.

The makeup function control unit 160 may expand and display at least part of the character appearance based on the makeup tool information to provide the at least part of the character appearance to the game client 200. For example, when a character is displayed with a full size and a selected makeup input tool corresponds to a brusher, the makeup function control unit 160 may center a character face on the makeup input interface to cause game client 200 to display the centered character face. For another example, when a character face is displayed and a selected makeup input tool corresponds to an eyebrow knife, the makeup function control unit 160 may center an eyebrow of the character through overlapping the eyebrow on the previously displayed character face or without overlapping.

The makeup function control unit 160 may provide an adjusted character appearance to continually provide a makeup function to the game client 200.

The makeup effect applying area determination unit 170 may use at least one of the pointer input information and the makeup tool information according to a applying scheme being received from the makeup function control unit 160 to determine the makeup effect applying area.

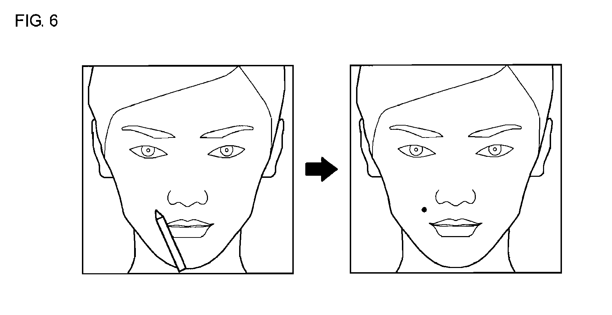

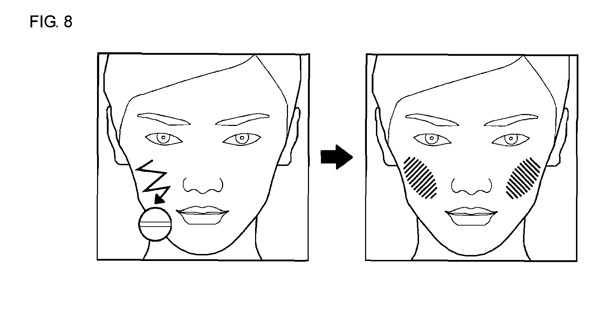

In one embodiment, when the applying scheme corresponds to the free drawing scheme, the makeup effect applying area determination unit 170 may check the brushing area for the makeup tool and may interpret click information in the pointer input information to designate a brushing area per click and when the pointer input information includes a plurality of clicks, the makeup effect applying area determination unit 170 may include a plurality of brushing areas to determine the applying area. For example, whenever the makeup tool corresponds to a spotting in FIG. 6, the makeup effect applying area determination unit 170 may determine an area where the click occurs as the applying area. For another example, when the makeup tool corresponds to a foundation in FIG. 8, the makeup effect applying area determination unit 170 may determine a path moving along a pointer during a click as the applying area.

In one embodiment, when the applying scheme corresponds to the fixed area scheme , the makeup effect applying area determination unit 170 may use at least one of the makeup tool information and the click information to determine the applying area. For example, when the makeup tool corresponds to a brusher and the click occurs around a cheekbone, the makeup effect applying area determination unit 170 may designate the brushing area (e.g., a brusher size) on an area where the click occurs to determine the applying area. However, when the makeup tool corresponds to a brusher and the click occurs under a chin, the makeup effect applying area determination unit 170 may not determine an area where the click occurs as the applying area.

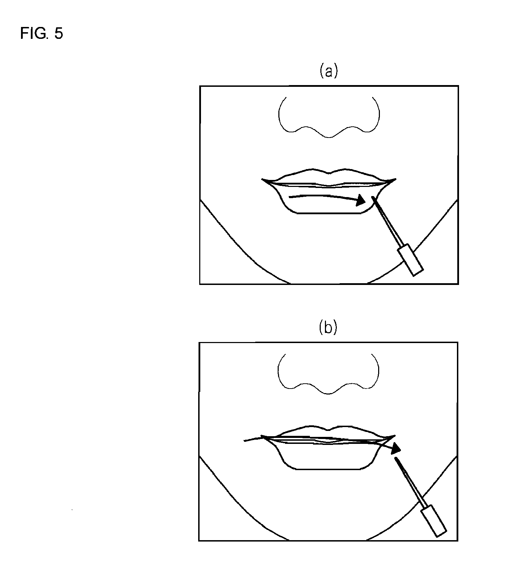

In one embodiment, when the applying scheme corresponds to the fixed area scheme and the click occurs in a predetermined closed curve in the displayed character appearance, the makeup effect applying area determination unit 170 may determine an inner area of the closed curve as the applying area. For example, when the makeup tool corresponds to a lip gloss in FIG. 5 and the click occurs in lips area, the makeup effect applying area determination unit 170 may determine the full lips area as the applying area.

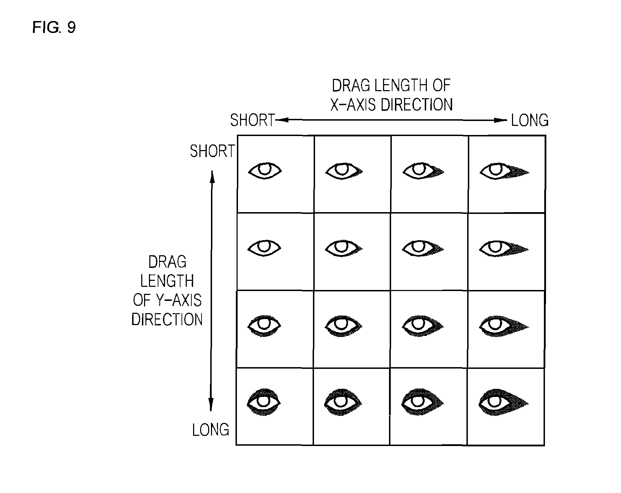

In one embodiment, when the applying scheme corresponds to the variable area scheme, the makeup effect applying area determination unit 170 may use the pointer input information to determine the applying area. In detail, the makeup effect applying area determination unit 170 may determine the makeup effect applying area according to a user's drag input. For example, when the makeup tool corresponds to a mascara in FIG. 9, the makeup effect applying area determination unit 170 may determine an mascara applying area according to the user's drag input when the user locates a pointer around eyes.

In one embodiment, the makeup effect applying area determination unit 170 may predetermine a plurality of differently divided areas based on the makeup tool and the plurality of the differently divided areas may be dependent on horizontal or vertical input for applying the variable area scheme. The makeup effect applying area determination unit 170 may determine the applying area by determining a specific variable area where a user's drag input is applied.

In another embodiment, the makeup effect applying area determination unit 170 may obtain drag lengths of X-axis and Y-axis directions based on the drag length information and the drag direction information in the pointer input information and may adjust the drag lengths of X-axis and Y-axis directions into a predetermined unit length per the makeup tool to obtain the applying areas for X-axis and Y-axis directions.

The parameter obtaining unit 180 may use at least one of the makeup tool information and the pointer input information to obtain the effect parameter being applied to the applying area being determined by the makeup effect applying area determination unit 170. The parameter obtaining unit 180 may interpret the pointer input information based on the applying scheme to obtain a makeup effect applying parameter.

In one embodiment, when the applying scheme corresponds to the free drawing scheme, the parameter obtaining unit 180 may obtain a brushing effect being predetermined per the makeup tool or being selected by the user as the effect parameter. The makeup function control unit 160 may apply the brushing effect to an applying area including at least of brushing area to assign the makeup effect. For example, when the makeup tool corresponds to a spot in FIG. 6, the makeup function control unit 160 may obtain an effect for the spot where the click occurs as the effect parameter. Herein, a detailed parameter (i.e., a spot size, a color) may be received and be selected through the makeup input interface.

In one embodiment, when the applying scheme corresponds to the fixed area scheme, the parameter obtaining unit 180 may use the pointer input information including the applying area being determined by the makeup effect applying area determination unit 170 to obtain the effect parameter.

In one embodiment, the parameter obtaining unit 180 may identify the click information or drag length information being performed on the applying area and may assign a weight value according to a click number or a drag length being obtained based on the click information or the drag length information to obtain an effect value being applied to the applying area. The parameter obtaining unit 180 may determine a parameter item (i.e., adjustable parameter) being adjusted based on the makeup tool and may apply the obtained effect value for the parameter item to obtain the effect parameter. For example, in a lip gloss as illustrated in FIG. 5, the parameter obtaining unit 180 may obtain a gloss value of the effect parameter being assigned to a relatively low value when the drag length is short like FIG. 5 (a) and a gloss value of the effect parameter being assigned to a relatively high value when the drag length is long like FIG. 5 (b).

Herein, the parameter item (i.e., adjustable parameter) adjusted based on the makeup tool may correspond to one of a color, a brightness, a gloss and a revert.

In one embodiment, when the applying scheme corresponds to the variable area scheme, the parameter obtaining unit 180 may use an effect being applied to the applying area and being determined according to the makeup tool to obtain the effect parameter.

FIG. 5 through FIG. 11 are diagrams illustrating various makeup tools and various makeup effects.

FIG. 5 illustrates an embodiment of a lip gloss and the lip gloss may correspond to a makeup tool for a fixed area (e.g., lip) described in the above. Therefore, when the user performs a drag, the makeup effect applying area determination unit 170 may determine the lip as the applying area and the parameter obtaining unit 180 may obtain the makeup effect applying parameter according to the drag length. The makeup effect applying area determination unit 170 may apply the effect parameter to the lips to change a corresponding texture and the makeup function control unit 160 may provide information for changed character to game client 200.

FIG. 6 illustrates an embodiment of a spotting and the spotting may be applied to the free drawing scheme. Therefore, the makeup effect applying area determination unit 170 may determine an area where the click occurs by the user as the applying area and the parameter obtaining unit 180 may apply a makeup effect by using a spot size selected by a user or selected by default as the effect parameter

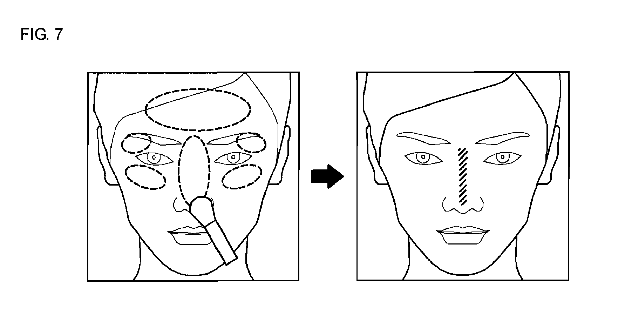

FIG. 7 illustrates an embodiment of a highlighter and the highlighter may be applied to the fixed area scheme. That is, an applying area being applied the highlighter (e.g., a forehead, a nose, eyes and a cheek) may be predetermined and the parameter obtaining unit 180 may use the click information or drag information for use's brush touch to obtain the highlighter effect (i.e., brightness level).

FIG. 8 illustrates an embodiment of a foundation (or a brusher) and the foundation may be applied to the free drawing scheme. Therefore, the applying area may correspond to an applying area applying a brushing area to a pointer moving line for a user's click and the parameter obtaining unit 180 may obtain a color being selected by the user or being predetermined as the effect parameter to apply the makeup effect.

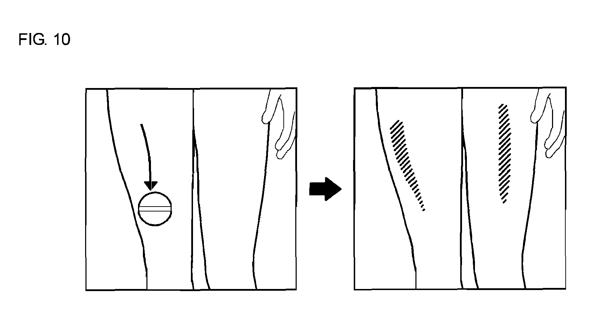

FIG. 10 through FIG. 11 is diagrams illustrating a procedure where the described technology may use a makeup effect to body parts other than a face of a virtual character.

FIG. 10 illustrates an embodiment of a body balm, the makeup effect applying area determination unit 170 may determine a drag area of the body balm as the applying area (i.e., the free drawing area) and the parameter obtaining unit 180 may use a color or a brightness of the body balm as the effect parameter to provide the makeup effect.

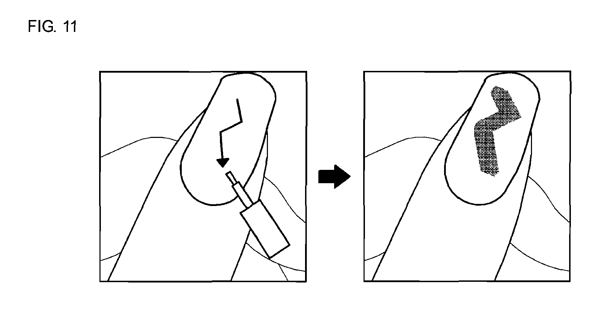

FIG. 11 illustrates an embodiment for a nail polish (or a pedicure), the makeup effect applying area determination unit 170 may determine a path of a user's free drawing as the applying area (i.e., free drawing area) and the parameter obtaining unit 180 may use the color or gloss being predetermined or being selected by the user as the effect parameter to provide the makeup effect.

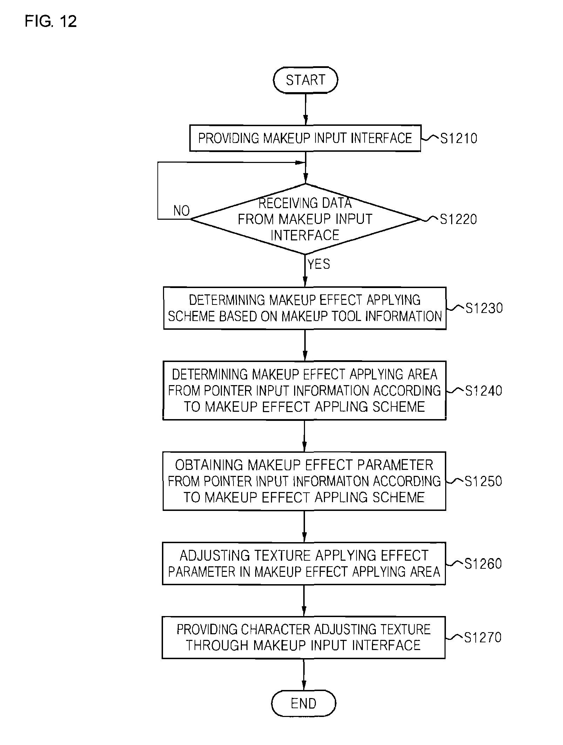

FIG. 12 through FIG. 13 illustrate various embodiments of the online game providing method. These embodiments are also performed in the game providing system 100 and substantially equivalent components or procedures will be omitted. However, this omission should be understood to a person of ordinary skill in the art and should not limit the claim scope.

FIG. 12 is a flowchart illustrating an embodiment of the online game providing procedure.

Referring to FIG. 12, the game providing system 100 may include a list for the character face and the at least one makeup tool and may provide the makeup input interface to the game client (Step S1210).

The game providing system 100 may receive the makeup tool information for one makeup tool being selected in the makeup tool list and the pointer input information for the displayed character face from the game client 200 through the game input interface (Step S1220) to determine the makeup effect applying scheme based on the makeup tool information (Step S1230).

The game providing system 100 may use the pointer input information according to the applying scheme to determine the makeup effect applying area (Step S1240) and may obtain the effect parameter being applied to the applying area (Step S1250).

The game providing system 100 may apply the effect parameter to the applying area to adjust the texture of the character face (Step S1260) and may provide the character face adjusting the texture through the makeup input interface (Step S1270).

The makeup effect applying scheme may be classified based on the applying area and may include at least one of (1) a free drawing scheme designating a pointer moving line as the as a applying area (2) a fixed area scheme fixing the applying area and (3) a variable area scheme varying the applying area.

The pointer input information may include at least one of the click information, the drag length information and the drag direction information.

In one embodiment for Step S1230 through S1250, the game providing system 100 may check whether the identified makeup tool by the makeup tool information corresponds to a makeup tool in the free drawing scheme and when the makeup tool may be applied to the free drawing scheme, the game providing system 100 may check the brushing area for the makeup tool. The game providing system 100 may apply the brushing area being checked per click according to the click information to change the texture of the applying area.

In one embodiment for Step S1230 through S1250, the game providing system 100 may check whether the identified makeup tool by the makeup tool information corresponds to a makeup tool in the fixed area scheme and when the makeup tool may be applied to the fixed area scheme, the game providing system 100 may use one of the makeup tool information and the click information to determine the applying area. The game providing system 100 may use the pointer input information being performed for the applying area to obtain the effect parameter.

In one embodiment for Step S1230 through S1250, the game providing system 100 may use a range of the closed curve to determine the applying area. In detail, the game providing system 100 may use the click information to check whether the click occurs in the predetermined closed curve and when the click occurs in the predetermined closed curve, the game providing system 100 may determine the inner area of the closed curve as the applying area.

In one embodiment for Steps S1230 through S1250, the game providing system 100 may obtain the effect parameter based on the click and drag length. In detail, the game providing system 100 may identify the click information and the drag length information being performed on the applying area and may assign the weight value according to the click number and the drag length from the identified the click information and the drag length information to obtain the applying effect value being applied to the applying area. The game providing system 100 may determine the adjustable parameter according to the makeup tool and may apply the effect value for the determined parameter item obtain the effect parameter. Herein, the parameter item may correspond to at least one of the color, the brightness, the gloss and the revert.

In one embodiment for Steps S1230 through S1250, the game providing system 100 may check whether the identified makeup tool by the makeup tool information corresponds to a makeup tool in the variable area scheme and when the makeup tool may be applied to the variable area scheme, the game providing system 100 may use the pointer input information to determine the applying area. The game providing system 100 may use the determined makeup effect according to the makeup tool for the applying area to obtain the effect parameter.

In one embodiment for Steps S1230 through S1250, the game providing system 100 may use the lengths of the X-axis and Y-axis directions to obtain the variable area. In detail, the game providing system 100 may obtain drag lengths of X-axis and Y-axis directions based on the drag length information and the drag direction information in the pointer input information and may adjust the drag lengths of X-axis and Y-axis directions into a predetermined unit length per the makeup tool to obtain the applying areas for X-axis and Y-axis directions.

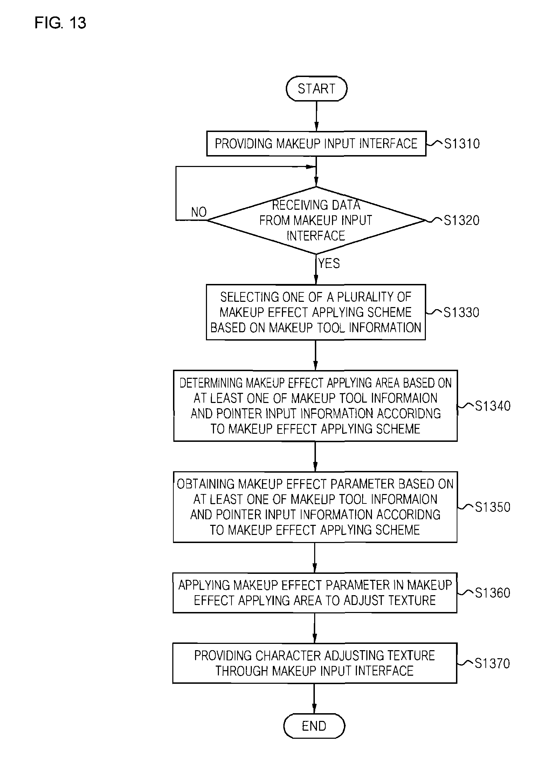

FIG. 13 is a flowchart illustrating another embodiment of the online game providing procedure.

Referring to FIG. 13, the game providing system 100 may provide the makeup input interface displaying a predetermined character appearance to the game client 200 (Step S1310) and may receive the makeup tool information and pointer input information through the makeup input interface (Step S1320).

The game providing system 100 may select one of a plurality of makeup effect applying scheme according to the makeup tool information (Step S1330).

The game providing system 100 may use at least one of the makeup tool information and pointer input information according to the applying scheme to determine the makeup effect applying area (Step S1340) and may obtain the effect parameter being applied to the applying area (Step S1350).

The game providing system 100 may apply the effect parameter to the applying area to adjust the texture of the character face (Step S1360) and may provide the character appearance adjusted the texture through the makeup tool interface (Step S1370).

In one embodiment for Step S1310 through S1320, when the game providing system 100 receives the makeup tool information, the game providing system 100 may expand at least part of the character appearance to provide the expanded character appearance to the game client 200.

In one embodiment for Step S1330, when the makeup tool corresponds to one of a foundation, a spot, a concealer and a nail polish, the game providing system 100 may use the free drawing scheme designating the makeup effect according to the pointer moving line as the applying scheme.

In one embodiment for Step S1330, when the makeup tool corresponds to one of a brusher, a highlighter, a lip stick and a lip gloss, the game providing system 100 may use the fixed area scheme fixing the makeup effect area per the makeup tool as the applying scheme.

In one embodiment for Step S1330, when the makeup tool corresponds to one of eye liner and eye shadow, the game providing system 100 may use the variable area scheme varying the makeup effect applying area according to the pointer input information as the applying scheme.

Although this document provides descriptions of preferred embodiments of the present invention, it would be understood by those skilled in the art that the present invention can be modified or changed in various ways without departing from the technical principles and scope defined by th e appended claims.

## Claims

1. An online game providing method being performed by an online game providing system, the online game providing system being coupled at least one game client through a network and providing an online game based on a virtual character to the coupled at least one client, the online game providing method comprising:
(a) providing a makeup input interface to the at least one game client, the makeup input interface displaying a virtual character face and a list for at least one makeup tool;
(b) receiving makeup tool information selected from the makeup tool list and pointer input information inputted at the displayed virtual character face from a game client;
(c) determining a makeup effect applying scheme based on the makeup tool information and a makeup effect applying area based on the pointer input information according to the makeup effect applying scheme and obtaining an effect parameter being applied to the makeup effect applying area; and
(d) applying the effect parameter to the makeup effect applying area to perform a texture adjustment on the virtual character face and providing the texture adjusted face through the makeup input interface.

2. The online game providing method of claim 1, wherein the makeup effect applying scheme is classified based on the makeup effect applying area and includes at least one of a free drawing scheme designating a pointer moving line as the makeup effect applying area, a fixed area scheme fixing the makeup effect applying area and a variable area scheme varying the makeup effect applying area according to the pointer input information.

3. The online game providing method of claim 2, wherein the pointer input information includes at least one of click information, drag length information and drag direction information.

4. The online game providing method of claim 2, wherein the step (c) includes
checking whether a makeup tool in the makeup tool information is adaptable for the free drawing scheme; and
determining a brushing area for the makeup tool when the makeup tool is adaptable for the free drawing scheme; and
applying the makeup tool to the brushing area per a click to change a texture of the brushing area.

5. The online game providing method of claim 2, wherein the step (c) includes
(c1) checking whether the makeup tool in the makeup tool information is adaptable for the fixed area scheme; and
(c2) using at least one of the makeup tool information or the click information to determine the makeup effect applying area using when the makeup tool is adaptable for the fixed area scheme; and
(c3) using pointer input information being performed on the makeup effect applying area to obtain the effect parameter.

6. The online game providing of claim 5, wherein the step (c2) includes checking whether the click occurs in a specific closed curve based on the click information; and
determining an inner area of the closed curve as the makeup effect applying area when the click occurs.

7. The online game providing method of claim 5, wherein the step (c3) includes identifying the click information or the drag length information being performed on the makeup effect applying area;
assigning a weight value according to a click number or a drag length being obtained based on the click information or the drag length information to obtain an effect value;
determining a parameter item being adjusted based on the makeup tool and applying the effect value for the parameter item to obtain the effect parameter.

8. The online game providing method of claim 2, wherein the step (c) includes
(c1) checking whether the makeup tool in the makeup tool information is adaptable for the variable area scheme;
(c2) determining the makeup effect applying area based on the pointer input information when the makeup tool is adaptable for the variable area scheme; and
(c3) obtaining the effect parameter based on the determined effect area according to the makeup tool from the makeup effect applying area.

9. The online game providing of claim 8, wherein the step (c2) includes
obtaining drag lengths of X-axis and Y-axis directions based on drag length information and drag direction information in the pointer input information; and
adjusting the obtained drag lengths of X-axis and Y-axis directions into a predetermined unit length per makeup tool to obtain makeup effect applying areas for X-axis and Y-axis directions.

10. The online game providing method of claim 1, wherein the step (a) includes
expanding the some areas of the character appearance being applied to the makeup tool to provide the some areas information to the game client when the makeup tool information is received.

11. The online game providing method of claim 1, wherein the step (c) includes using a free drawing scheme designating an effect according to a pointer moving line when the makeup tool corresponds to one of a foundation, a spot, a concealer and a nail polish.

12. The online game providing method of claim 1, wherein the step (c) includes
using a fixed area scheme fixing an makeup effect applying area per the makeup tool when the makeup tool corresponds to one of a blusher, a highlighter, a lipstick and a lip gloss.

13. An online game providing system being coupled at least one game client through a network and providing an online game based on a virtual character to the coupled at least one client, the online game providing system comprising:
a makeup function control unit providing a makeup input interface displaying a makeup tool list and a character appearance and reproviding an adjusted character appearance applying an effect parameter about a designated makeup effect applying area;
an makeup effect applying area determination unit using at least one of pointer input information for the character appearance and makeup tool information including the makeup tool in the makeup tool list to determine a makeup effect applying area; and
an parameter obtaining unit using at least one of the makeup tool information and the pointer input information to obtain a makeup effect applying parameter being applied to the makeup effect applying area.

14. The online game providing system of claim 13, wherein the makeup function control unit determines a makeup effect applying scheme based on the makeup tool information; and
wherein the makeup effect applying area determination unit determines the makeup effect applying area based on at least one of the pointer input information or the makeup tool information according to the determined makeup effect applying scheme.

15. In a storage medium recording a program for performing an online game providing method, the program being coupled at least one game client through a network and providing an online game based on a virtual character to the coupled at least one client, the program comprising:
(a) a function of providing a makeup input interface displaying a character face and a list for at least one makeup tool to a game client;
(b) a function of receiving makeup tool information in a makeup tool list and pointer input information inputted at the displayed character face from the game client
(c) a function of determining a makeup effect applying scheme based on the makeup tool information and determining a makeup effect applying area based on the pointer input information according to the selected makeup effect applying scheme to obtain a makeup effect applying parameter;
(d) a function of applying the effect parameter to the applying area to adjust a texture of the character face and providing the adjusted texture of character face through the makeup input interface.
